# EUROPÄISCHE PATENTSCHRIFT

(11) **EP 3 302 875 B1**
(45) Veröffentlichungstag und Bekanntmachung des Hinweises auf die Patenterteilung: **22.05.2019**
(21) Anmeldenummer: 16727389.5
(22) Anmeldetag: 27.05.2016
(51) Int. Cl.: B23P 19/00, B23P 19/06, B21J 15/32

(54) **VORRICHTUNG UND VERFAHREN ZUM POSITIONIEREN VON VERBINDUNGSELEMENTEN**
DEVICE AND METHOD FOR POSITIONING CONNECTION ELEMENTS
DISPOSITIF ET PROCÉDÉ DE POSITIONNEMENT D'ÉLÉMENTS DE FIXATION

(30) Priorität: 03.06.2015 DE 102015210322
(43) Veröffentlichungstag der Anmeldung: 11.04.2018
(73) Patentinhaber: Arnold Umformtechnik GmbH & Co. KG, 74670 Forchtenberg-Ernsbach (DE)
(72) Erfinder: WOLFARTH, Uwe, 74575 Schrozberg (DE); LUTZ, Joachim, 74388 Talheim (DE); LINDT, Alex, 74653 Künzelsau (DE)
(74) Vertreter: Patentanwälte Ruff, Wilhelm, Beier, Dauster & Partner mbB
(86) Internationale Anmeldenummer: PCT/EP2016/061985
(87) Internationale Veröffentlichungsnummer: WO 2016/193140

(56) Entgegenhaltungen:
- DE-A1-102004 042 969
- DE-A1-102006 016 255

## Beschreibung

Die Erfindung betrifft eine Vorrichtung und ein Verfahren zum Positionieren von Verbindungselementen, wobei ein Verbindungselement mittels einer Vorschubeinrichtung aus einem Übernahmebereich in einen Übergabebereich für eine Fügeeinrichtung überführbar ist und wobei eine Sperreinrichtung in der Sperrposition eine Bewegung des Verbindungselement aus dem Übernahmebereich in den Übergabebereich sperrt. Die Erfindung betrifft weiter eine Vorrichtung zum Setzen von Verbindungselementen.

Bei dem Verbindungselement handelt es sich beispielsweise um einen Einpressbolzen oder ein beispielsweise aus DE 10 2004 025 492 A1 bekanntes Fügeelement. Diese Verbindungselemente haben einen Kopf und einen Schaft, wobei der Schaft in einer Ausgestaltung ein Gewinde, in anderen Ausgestaltungen eine Schneidspitze aufweist. Alternativ oder zusätzlich ist unterhalb des Kopfes eine umlaufende Vertiefung ausgebildet, die zur axial festen Verbindung des Verbindungselements mit einem Bauteil oder einer Baugruppe dient, in das oder die das Verbindungselement eingepresst wird.

Ein Verfahren und eine Vorrichtung zum Einpressen von Einpressbolzen ist beispielsweise aus DE 10 2006 016 255 A1 bekannt.

### AUFGABE UND LÖSUNG

Der Erfindung liegt die Aufgabe zu Grunde eine Möglichkeit zu schaffen, Verbindungselemente mit einer hohen Genauigkeit zu einem festgelegten Zeitpunkt für eine Fügeeinrichtung, beispielsweise einen Setzstempel, zu positionieren.

Diese Aufgabe wird durch die Gegenstände der unabhängigen Ansprüche gelöst. Vorteilhafte Ausführungsformen sind Gegenstand der abhängigen Ansprüche.

Gemäß einem ersten Aspekt wird eine Vorrichtung zum Positionieren von Verbindungselementen mit einer Vorschubeinrichtung und einer Sperreinrichtung die mindestens einen zwischen einer Sperrposition und einer Freigabeposition verschwenkbaren Hebel aufweist, geschaffen, wobei ein Verbindungselement mittels der Vorschubeinrichtung aus einem Übernahmebereich in einen Übergabebereich für eine Fügeeinrichtung überführbar ist, wobei der mindestens eine Hebel zwischen einer Sperrposition und einer Freigabeposition verschwenkbar ist, wobei der mindestens eine Hebel in der Sperrposition eine Bewegung des Verbindungselements aus dem Übernahmebereich in den Übergabebereich sperrt, wobei mindestens ein relativ zu dem mindestens einen Hebel verstellbarer Endanschlag vorgesehen ist, mittels welchem eine Bewegung des mindestens einen Hebels aus der Sperrposition in die Freigabeposition sperrbar ist, wobei der mindestens eine Hebel als zweiseitiger Hebel mit einem ersten Arm und einem zweiten Arm gestaltet ist, und wobei ein erster Arm des mindestens einen Hebels mit dem mindestens einen Endanschlag zur Sperrung einer Bewegung des mindestens einen Hebels aus der Sperrposition in die Freigabeposition zusammenwirkt und ein zweiter Arm des mindestens einen Hebels in der Sperrposition als Haltebacken für das Verbindungselement fungiert .

Das Verbindungselement wird beispielsweise mittels Druckluft in den Übernahmebereich gefördert. Der Endanschlag verhindert, dass ein in den Übernahmebereich mit hoher Geschwindigkeit und/oder hoher kinetischer Energie einlaufendes Verbindungselement derart auf die Sperreinrichtung wirkt, dass diese frühzeitig und/oder unkontrolliert in die Freigabeposition überführt wird. Der Endanschlag verhindert somit eine unkontrollierte und/oder frühzeitige Bewegung des Verbindungselements aus dem Übernahmebereich in den Übergabebereich. Eine Überführung des Verbindungselements in den Übergabebereich für eine Fügeeinrichtung, beispielsweise für einen Setzstempel, erfolgt mittels der Vorschubeinrichtung, wobei diese Bewegung erst nach oder mit einem Bewegen des Endanschlags ermöglicht wird.

Sofern nur ein Hebel vorgesehen ist, weist die Vorrichtung vorzugsweise eine geeignete Gegenfläche auf, mit welcher die Sperreinrichtung und/oder der Endanschlag zusammenwirken. Für eine Sicherung der Sperreinrichtung in der Sperrposition wird der Endanschlag in einer Ausgestaltung mit nur einem Hebel an einer Innenseite des ersten Arms des Hebels positioniert. Dadurch wird eine Schwenkbewegung des Hebels, bei welcher ein zweiter Arm nach außen verschwenkt wird, verhindert und das Verbindungselement ist zwischen dem zweiten Arm des Hebels und einer Gegenfläche klemmbar.

In einer Ausgestaltung umfasst die Sperreinrichtung zwei gegenläufig verschwenkbare zweiseitige Hebel, wobei die ersten Arme der Hebel mit dem Endanschlag zur Sperrung einer Bewegung der Hebel aus der Sperrposition in die Freigabeposition zusammenwirken und die zweiten Arme der Hebel als Haltebacken für das Verbindungselement fungieren.. Die Hebel vorzugsweise sind symmetrisch zu einer Mittellinie angeordnet. Für eine Sicherung der Sperreinrichtung in der Sperrposition wird der Endanschlag zwischen die zwei ersten Arme der Hebel geschoben, sodass eine Schwenkbewegung der Hebel, durch welche sich die zwei ersten Arme annähern, verhindert wird. Das Verbindungselement ist so sicher zwischen den beiden zweiten Armen der Hebel klemmbar.

In einer Ausgestaltung ist dem mindestens einen Hebel ein Kraftelement, insbesondere ein Federelement zugeordnet, welches den Hebel in die Sperrposition zwingt. Da das Kraftelement nur unterstützend auf den mindestens einen Hebel wirkt, ist es möglich, eine Federkraft kleiner zu dimensionieren, als beispielsweise bei einer aus DE 10 2006 016 255 A1 bekannten Vorrichtung. In einigen Ausgestaltungen wird auf das Kraftelement verzichtet.

In einer Ausgestaltung ist eine Führungseinrichtung, beispielsweise eine Führungsschiene vorgesehen, entlang welcher die Verbindungselemente aus dem Übernahmebereich in den Übergabebereich verschoben werden. In vorteilhaften Ausgestaltungen ist das Verbindungselement mittels der Vorschubeinrichtung entlang des zweiten Arms des einen Hebels oder entlang der zweiten Arme der zwei Hebel in den Übergabebereich verschieblich. Der zweite Arm des Hebels oder die zweiten Arme der Hebel weisen zu diesem Zweck vorzugsweise eine Führungsfläche auf, wobei beispielsweise bei einem einen Schaft und einen Kopf aufweisenden Verbindungselement eine Unterseite des Kopfes auf der Führungsfläche aufliegt und der Schaft zwischen den Hebeln - oder zwischen einem Hebel und einer Führungsschiene - in der Freigabeposition der Hebel geführt und in der Sperrposition geklemmt ist.

Die Vorschubeinrichtung umfasst vorzugsweise einen relativ zu dem mindestens einen Hebel linear verschiebbaren Schieber. Der Schieber greift beispielsweise bei einem einen Schaft und einen Kopf aufweisenden Verbindungselement an dem Schaft für eine Verstellbewegung des Verbindungselements an. Eine Form eines freien Endes des Schiebers ist dabei in vorteilhaften Ausgestaltungen an die Form des Verbindungselements angepasst. Der Endanschlag ist in einer Ausgestaltung getrennt von dem Schieber gestaltet, wobei eine Bewegung des Endanschlags und des Schiebers aufeinander abgestimmt sind, sodass eine Freigabe der Sperreinrichtung aus der Sperrposition bei einer Verstellbewegung des Verbindungselements mittels des Schiebers sichergestellt ist. Der Endanschlag wird dabei beispielsweise gegenläufig zu dem Schieber aus dem Bereich zwischen den Hebeln oder zwischen einem Hebel und einer Gegenfläche bewegt. In vorteilhaften Ausgestaltungen fungiert ein erster Abschnitt des Schiebers als Endanschlag. Dadurch kann auf zusätzliche Antriebsmittel, Getriebeelemente oder dergleichen verzichtet werden.

Der Schieber weist vorzugsweise einen in Längsrichtung zu dem ersten Abschnitt beabstandeten, zweiten Abschnitt auf, wobei der zweite Abschnitt eine Gestalt aufweist, um nach Überfahren einer Entriegelposition ein Verschwenken des Hebels in die Freigabeposition freizugeben. In anderen Worten ist beispielsweise ein Querschnitt eines zwischen zwei Hebel eingeführten Schiebers nicht konstant. Der Schieber ist relativ zu der Sperreinrichtung verstellbar. In einer ersten Position ist ein als Endanschlag fungierender erster Abschnitt zwischen den ersten Armen der Hebel eingeführt, sodass ein Verschwenken der Hebel in die Freigabeposition gesperrt ist. Bei einem Verschieben des Schiebers gelangt nach Überfahren einer Entriegelposition der zweite Abschnitt zwischen die zwei ersten Arme. Der zweite Abschnitt ist derart gestaltet, dass eine Schwenkbewegung der Hebel in die Freigabeposition möglich ist. In einer Ausgestaltung ist zu diesem Zweck ein Querschnitt des Schiebers in der Ebene der Hebel in dem zweiten Abschnitt gegenüber dem ersten Abschnitt verjüngt.

In vorteilhaften Ausgestaltungen weist der erste Arm des Hebels oder der Hebel einen in den Stellweg des Schiebers ragenden, mit dem Endanschlag zusammenwirkenden Vorsprung auf, wobei vorzugsweise eine dem Vorsprung zugewandte Wand des Schiebers in dem zweiten Abschnitt eine Nut aufweist. Dadurch ist eine Schwenkbewegung der Hebel in die Freigabeposition möglich, wobei gleichzeitig an die Nut angrenzende Wandungsbereiche des Schiebers als Führungsflächen für den Schieber bestehen bleiben.

In vorteilhaften Ausgestaltungen ist vorgesehen, dass eine maximale Stellbewegung der Vorschubeinrichtung in Richtung des Übergabebereichs bei einem Leerhub größer ist als bei einem Positionierhub eines Verbindungselements. In anderen Worten, ist eine Stellbewegung durch das Verbindungselement begrenzt, wohingegen bei einem Leerhub, d.h. einer Bewegung ohne dass ein Verbindungselement eingelegt wurde, die Vorschubeinrichtung, insbesondere der Schieber, über diese Endlage bewegt wird. Die Bewegung des Schiebers ist mittels Sensoren erfassbar, Diese erlaubt es, auf einfache Weise das Vorhandensein eines Verbindungselements in dem Übergabebereich abzufragen, wobei nur dann, wenn dort ein Verbindungselement vorhanden ist, eine Aktivierung der Fügeeinrichtung erfolgt, beispielsweise ein Setzvorgang ausgelöst wird.

Gemäß einem zweiten Aspekt wird eine Vorrichtung zum Setzen von Verbindungselementen mit einer Zuführeinrichtung zum vereinzelten Zuführen von Verbindungselementen zu einem Übernahmebereich; mit einem Setzstempel zum Setzen eines in einem Übergabebereich positionierten Verbindungselements und mit einer Vorrichtung zum Positionieren von Verbindungselementen geschaffen, wobei die Vorrichtung zum Positionieren von Verbindungselementen eine Vorschubeinrichtung, mittels der ein Verbindungselement aus dem Übernahmebereich in einen Übergabebereich überführbar ist, eine Sperreinrichtung mit mindestens einem zwischen einer Sperrposition und einer Freigabeposition verstellbaren Hebel, und einen relativ zu dem Hebel verstellbaren Endanschlag aufweist, wobei der Hebel in der Sperrposition eine Bewegung des Verbindungselement aus dem Übernahmebereich sperrt und wobei mittels des Endanschlags eine Bewegung des Hebels aus der Sperrposition in die Freigabeposition sperrbar ist. Das Verbindungselement wird beispielsweise mittels der Vorrichtung in ein Bauteil oder eine Baugruppe eingepresst oder eingefügt. Der Setzstempel weist in einer Ausgestaltung an seinem freien Ende eine Einrichtung auf, mittels welcher das Verbindungselement an dem Setzstempel gehalten wird. Zu diesem Zweck ist beispielsweise ein Magnet und/oder eine Ansaugvorrichtung, die das Verbindungselement mithilfe von Unterdruck festhält, vorgesehen. In vorteilhaften Ausgestaltungen sind mechanische Klemmen zum Halten der Verbindungselemente an dem Setzstempel vorgesehen. Die Zuführvorrichtung ist vorzugsweise als Einblasvorrichtung umfassend mindestens ein Kanalstück gestaltet, wobei das Verbindungselement durch das Kanalstück mit Luftdruck geblasen wird. Das an die Vorrichtung zum Positionieren von Verbindungselementen anschließende Kanalstück ist vorzugsweise gekrümmt, wobei ein Endbereich tangential in den Übernahmebereich mündet.

Gemäß einem dritten Aspekt bei einem Verfahren zum Positionieren von Verbindungselementen, wobei ein Verbindungselement mittels einer Vorschubeinrichtung aus einem Übernahmebereich in einen Übergabebereich für eine Fügeeinrichtung überführt wird, eine Bewegung des Verbindungselement aus dem Übernahmebereich in den Übergabebereich mittels mindestens eines in einer Sperrposition angeordneten Hebels einer Sperreinrichtung gesperrt wird, der mindestens eine Hebel zur Bewegung des Verbindungselements in den Übergabebereich in eine Freigabeposition überführt wird, vorgesehen, dass bei einer Übernahme des Verbindungselements in den Übernahmebereich eine Bewegung des mindestens einen Hebels aus der Sperrposition in die Freigabeposition mittels eines Endanschlags gesperrt wird, wobei der mindestens eine Hebel als zweiseitiger Hebel mit einem ersten Arm und einem zweiten Arm gestaltet ist, wobei ein erster Arm des mindestens einen Hebels mit dem Endanschlag bei einer Übernahme des Verbindungselements in den Übernahmebereich zusammenwirkt, sodass eine Bewegung des Hebels aus der Sperrposition in die Freigabeposition gesperrt wird, und wobei die Bewegung des Verbindungselement aus dem Übernahmebereich in den Übergabebereich mittels eines zweiten Arms des mindestens einen in der Sperrposition angeordneten zweitseitigen Hebels der Sperreinrichtung gesperrt wird.

### KURZBESCHREIBUNG DER ZEICHNUNGEN

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten. Dabei zeigen:
- Figur 1: schematisch eine perspektivische Darstellung einer Vorrichtung zum Positionieren von Verbindungselementen;
- Figur 2: eine geschnittene Draufsicht auf die Vorrichtung gemäß Fig. 1 vor der Übernahme eines Verbindungselements;
- Figur 3: eine geschnittene Draufsicht auf die Vorrichtung gemäß Fig. 1 bei der Übernahme eines Verbindungselements in den Übernahmebereich;
- Figur 4: eine geschnittene Draufsicht auf die Vorrichtung gemäß Fig. 1 zu Beginn der Überführung des Verbindungselements aus dem Übernahmebereich in einen Übergabebereich;
- Figur 5: eine geschnittene Draufsicht auf die Vorrichtung gemäß Fig. 1 während der Überführung des Verbindungselements aus dem Übernahmebereich in den Übergabebereich;
- Figur 6: eine geschnittene Draufsicht auf die Vorrichtung gemäß Fig. 1 nach der Überführung des Verbindungselements in den Übergabebereich;
- Figur 7: schematisch eine geschnittene, perspektivische Seitenansicht einer Vorrichtung zum Setzen von Verbindungselementen; und
- Figur 8: eine geschnittene Draufsicht auf eine zweite Ausführungsform einer Vorrichtung zum Positionieren von Verbindungselementen in einem Zustand gemäß Fig. 3.

### DETAILLIERTE BESCHREIBUNG DER AUSFÜHRUNGSBEISPIELE

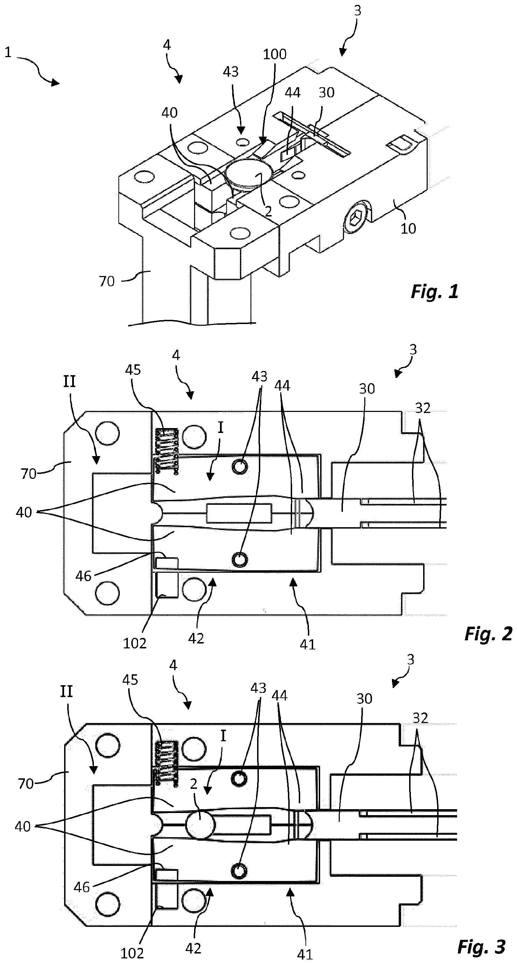

Figur 1 zeigt schematisch eine Vorrichtung 1 zum Positionieren von Verbindungselementen 2 in einem Übergabebereich für eine in Fig. 1 nicht dargestellte Füge- oder Setzeinrichtung in einer perspektivischen Darstellung. Fig. 2 bis 6 zeigen die Vorrichtung 1 gemäß Fig. 1 in einer geschnittenen Draufsicht vor der Übernahme eines Verbindungselements 2, bei der Übernahme eines Verbindungselements 2 in einen Übernahmebereich I, zu Beginn der Überführung des Verbindungselements 2 aus dem Übernahmebereich I in den Übergabebereich II, während der Überführung des Verbindungselements 2 aus dem Übernahmebereich I in den Übergabebereich II, bzw. nach der Überführung des Verbindungselements 2 in den Übergabebereich II.

Das Verbindungselement 2 ist bolzenförmig mit einem Kopf und einem Schaft.

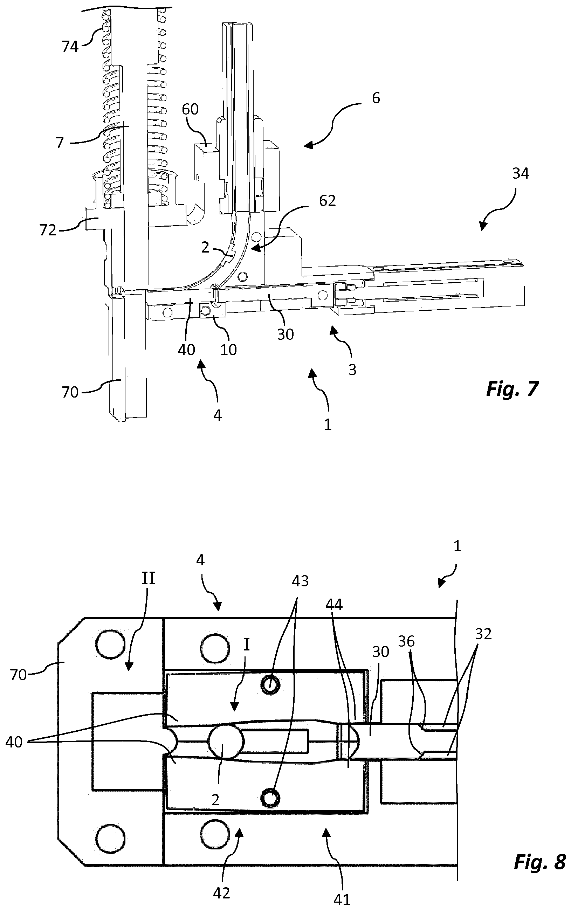

Die Vorrichtung 1 umfasst eine Vorschubeinrichtung 3 und eine Sperreinrichtung 4. Die dargestellte Vorrichtung 1 umfasst weiter eine Lagerplatte 10, mit deren Hilfe die Vorrichtung 1 an einer nicht dargestellten Anlage montiert werden kann. Die Lagerplatte 10 weist eine Führungsschräge 100 auf, sodass ein von einer Zuführeinrichtung 6 (vgl. Fig. 7) zugeführtes Verbindungselement 2 in ein zu dem Übergabebereich II weisendes Ende des Übernahmebereichs I geführt wird. In dem Übergabebereich II ist das Verbindungselement 2 für einen Setzstempel 7 (vgl. Fig. 7) oder eine andere Fügeeinrichtung zugänglich, wobei in dem dargestellten Ausführungsbeispiel der Übergabebereich II durch eine Führungsschiene 70 begrenzt ist.

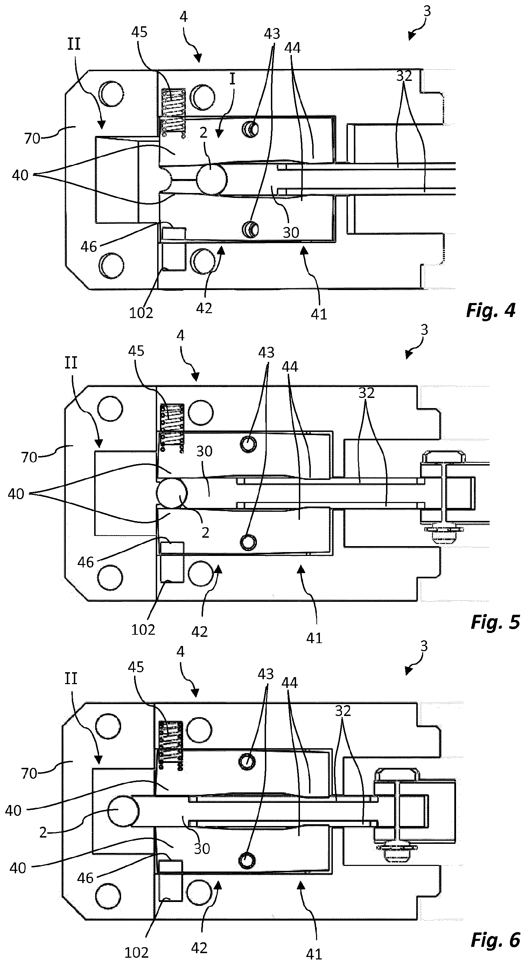

Ein Verbindungselement 2 ist mittels der Vorschubeinrichtung 3 aus dem Übernahmebereich I in den Übergabebereich II überführbar. Die dargestellte Vorschubeinrichtung 3 umfasst einen verstellbaren Schieber 30, welcher an einem Schaft des Verbindungselements 2 zum Verschieben des Verbindungselements 2 wie in den Figuren 4 bis 6 dargestellt angreift. Der Schieber 30 weist an den Seitenflächen jeweils eine sich in Längsrichtung erstreckende Nut 32 auf. Der Schieber 30 ist in einer Ausgestaltung mittels eines Pneumatikzylinders 34 (vgl. Fig. 7) verstellbar. Anstelle eines Pneumatikzylinders sind alternative Antriebe, beispielsweise mittels Hydraulik und/oder elektrisch denkbar. Der Pneumatikzylinder ist je nach Anforderung einfach- oder doppeltwirkend gestaltet. Zur besseren Übersicht ist der Pneumatikzylinder 30 der Vorschubeinrichtung 3 in den Figuren 1 bis 6 nicht dargestellt.

Mittels der Sperreinrichtung 4 ist eine Bewegung eines Verbindungselements 2 aus dem Übernahmebereich I in den Übergabebereich II sperrbar. Die Sperreinrichung 4 weist zu diesem Zweck mindestens einen Hebel 40 auf, wobei eine Bewegung des Verbindungselement aus dem Übernahmebereich I in den Übergabebereich II mittels des in einer Sperrposition angeordneten Hebels 40 gesperrt wird, und wobei der Hebel 40 zur Bewegung des Verbindungselements in den Übergabebereich in eine Freigabeposition überführt wird.

Die Sperreinrichtung 4 umfasst in dem dargestellten Ausführungsbeispiel zwei gegenläufig verschwenkbare zweiseitige Hebel 40. Die Hebel 40 weisen jeweils einen ersten Arm 41 und einen zweiten Arm 42 auf und sind um eine zwischen dem ersten und dem zweiten Arm liegende Achse mittels Zapfen 43 zwischen einer Sperrposition und einer Freigabeposition verschwenkbar. An den ersten Armen 41 weisen die Hebel 40 jeweils einen Vorsprung 44 auf, dessen Funktion weiter unten beschrieben wird. An den Hebeln 40 greift jeweils ein Federelement 45 an, welches die Hebel 40 in die Sperrposition zwingt, wobei in den Figuren 2 bis 6 nur ein Federelement 45 dargestellt ist. Das Federelement 45 ist in entsprechende Ausnehmungen 46, 102 an dem Hebel 40 bzw. der Lagerplatte 100 eingesetzt.

Die dargestellten Hebel 40 haben eine Doppelfunktion, da zusätzlich eine dem Kopf des Verbindungselements 2 zugewandte Fläche auch als Führungsfläche für die Verbindungselemente 2 bei der Bewegung aus dem Übernahmebereich I in den Übergabebereich II mittels des Schiebers 30 dient. Der Schaft der Verbindungselemente 2 ist zwischen den Hebeln 40 angeordnet. In anderen Ausgestaltungen wird das Verbindungselement 2 entlang einer getrennt zu den Hebeln 40 angeordneten Führungsschiene verschoben.

Wie in Fig. 3 erkennbar, sperren die Hebel 40 in der Sperrposition eine Bewegung des Verbindungselements 2 aus dem Übernahmebereich I in Richtung des Übergabebereichs II. Zu diesem Zweck ist ein Abstand den zweiten Arme 42 der Hebel 40 zumindest bereichsweise geringer als ein Durchmesser des Schafts der Verbindungselemente 2. In dem dargestellten Ausführungsbeispiel weisen die zweiten Arme 42 jeweils an ihren dem Schaft des Verbindungselements 2 zugewandten Flächen eine Einlaufschräge auf.

Die Hebel 40 sind aus der in den Fig. 1 bis 3 dargestellten Sperrposition in eine in Fig. 5 dargestellte Freigabeposition verschwenkbar, in welcher ein Abstand den zweiten Arme 42 größer ist als ein Schaftdurchmesser und eine Bewegung des Verbindungselements 2 in Richtung des Übergabebereichs II möglich ist.

Erfindungsgemäß ist mittels eines Endanschlags eine Bewegung der Hebel 40 aus der Sperrposition in die Freigabeposition sperrbar, wobei in dem dargestellten Ausführungsbeispiel ein erster Abschnitt des Schiebers 30 als Endanschlag fungiert.

In dem in Fig. 1 bis 3 dargestellten Zustand, ist der erste Abschnitt des Schiebers 30 zwischen die ersten Arme 41 der Hebel 40 eingeführt. Der als Endanschlag fungierende erste Abschnitt des Schiebers 30 verhindert so eine Verschwenkbewegung der Hebel 40 aus der in den Figuren 1 bis 3 dargestellten Sperrposition.

In dem dargestellten Ausführungsbeispiel weisen die Hebel 40 jeweils einen Vorsprung 44 auf, welcher in den Stellweg des Schiebers 30 ragt und mit einer Seitenwand des Schiebers 30 für eine Sicherung der Hebel 40 in der Sperrposition zusammenwirkt.

Für eine Überführung des Verbindungselements 2 in den Übergabebereich II wird der Schieber 30 derart angetrieben, dass der Schieber 30 auf das Verbindungselement 2 zu bewegt wird. Der Schieber 30 wird relativ zu den Hebeln 40 verschoben. Wie in Fig. 4 erkennbar, gelangt dabei ein zweiter Abschnitt des Schiebers 30, welcher die Nuten 32 aufweist, in den Bereich der Vorsprünge 44. Die Nuten 32 erlauben eine Verschwenkbewegung der Hebel 40 aus der Sperrposition in die Freigabeposition, wobei die Vorsprünge 44 in die Nuten 32 eingeführt werden.

Wie in Fig. 4 erkennbar, zwingen die Federelemente 45 zunächst die Hebel 40 in die Sperrposition, sodass eine Bewegung der Hebel 40 zwar nicht mehr gesperrt ist, die Hebel 40 jedoch zunächst in der Sperrposition verbleiben und weiter die Bewegung der Verbindungselemente 2 aus dem Übernahmebereich I in den Übergabebereich II sperren. Sobald der Schieber 30 an dem Verbindungselement 2, genauer an dessen Schaft angreift, wird das Verbindungselemente 2 in Richtung Übergabebereich II verschoben, wobei die Hebel 40 entgegen der Kraft der Federelemente 45 in die Freigabeposition gezwungen werden, wie in Fig. 5 erkennbar.

Bei einem Zurückziehen des Schiebers 30 aus der in Fig. 6 dargestellten Position in die in Fig. 2 dargestellte Position zwingen die Federelemente 45 die Hebel 40 in die Sperrposition, sodass ein Verkanten der Vorsprünge 44 in den Nuten 32 verhindert wird.

Fig. 7 zeigt die Vorrichtung zum Setzen von Verbindungselementen 2 mit einer Zuführeinrichtung 6 zum vereinzelten Zuführen von Verbindungselementen 2 zu einem Übernahmebereich I (vgl. Fig. 2 bis 6), mit einem Setzstempel 7 zum Setzen eines in einem Übergabebereich II (vgl. Fig. 2 bis 6) positionierten Verbindungselements 2 und einer Vorrichtung 1 gemäß den Fig. 1 bis 6 umfassend eine Vorschubeinrichtung 3 und eine Sperreinrichtung 4, wobei mittels der Vorrichtung 1 ein Verbindungselement 2 aus dem Übernahmebereich I in den Übergabebereich II überführbar ist.

An der Lagerplatte 10 sind ein Gehäuse 60 zum Anschluss der Zuführreinrichtung 6 und ein Gehäuse 72 für den Setzstempel 7 angebracht. Das Gehäuse 60 zum Anschluss der Zuführreinrichtung 6 weist ein Kanalstück 62 auf, welches in etwa tangential in dem Übernahmebereich der Vorrichtung 1 zum Positionieren der Verbindungselemente 2 mündet. Die Verbindungselemente 2 werden durch das Kanalstück 62 mithilfe von Druckluft befördert. Die Verbindungselemente 2 werden in dem dargestellten Ausführungsbeispiel derart in dem Übernahmebereich positioniert, dass der Schaft im Wesentlichen vertikal verläuft und der Kopf oberhalb des Schafts angeordnet ist.

Der Setzstempel 7 ist in dem dargestellten Ausführungsbeispiel in vertikaler Richtung entgegen der Kraft einer Rückstellfeder 74 mittels eines nicht dargestellten Antriebs verschiebbar. In axialer Verlängerung des Setzstempels 7 ist das Führungselement 70 vorgesehen, mittels welchem der Setzstempel 7 in der Bewegung geführt ist. Zum Setzen, insbesondere zum Einpressen eines Verbindungselements ist der Setzstempel 7 entlang des Führungselements 70 in Richtung eines Bauteils oder einer Baugruppe bewegbar. In anderen Ausgestaltungen ist kein Führungselement vorgesehen, wobei der Setzstempel 7 durch sein Gehäuse 72 geführt wird.

Die Vorschubeinrichtung 3 umfasst wie beschrieben einen Schieber 30, wobei der Schieber 30 mit einem Pneumatikzylinder 34 mechanisch gekoppelt ist, der einen Antrieb bildet.

Der Schieber 30 wird derart angetrieben, dass sein freies Ende in Richtung des Übergabebereichs II (vgl. Fig. 2 bis 6) bewegt wird. Sofern ein Verbindungselement 2 in dem Übernahmebereich I (vgl. Fig. 2 bis 6) positioniert ist, wird dieses dabei in den Übergabebereich II wie oben beschrieben überführt. Die Vorschubeinrichtung 3 ist dabei vorzugsweise derart gestaltet, dass eine maximale Stellbewegung des Schiebers in Richtung des Übergabebereichs II bei einem Leerhub, d.h. ohne Mitnahme eines Verbindungselements 2, größer ist als bei einem Positionierhub eines Verbindungselements 2. In einer Ausgestaltung ist zu diesem Zweck vorgesehen, dass das Verbindungselement 2 bei einem Positionierhub in einer Endlage an einen Endanschlag bewegt wird, wodurch die weitere Bewegung des Schiebers 30 gesperrt wird. Mittels einer Sensoreinrichtung ist erfassbar, ob die Endlage bei der Bewegung des Schiebers 30 überfahren wurde. Sofern die Sensoreinrichtung ein Überfahren der Endlage erfasst, wird ein Leerhub detektiert und die Vorrichtung 1 wird zum erneuten Setzen eines Verbindungselements angetrieben und/oder es wird eine Fehlermeldung abgegeben.

Sofern mittels der Sensoreinrichtung dagegen erfasst wurde, dass ein Verbindungselement 2 in den Übergabebereich II überführt wurde, kann der Schieber 30 zurückgezogen und der Setzstempel 7 zum Setzen des Verbindungselements 2 angetrieben werden. Für die Übergabe des Verbindungselements 2 an den Setzstempel 7 weist der Setzstempel 7 in einer Ausgestaltung an dem vorderen Ende Klemmen auf, die das Verbindungselement 2 an dem Setzstempel 7 halten.

Die in Fig. 1 bis 7 dargestellte Ausrichtung der Vorrichtung 1 ist lediglich beispielhaft und je nach Anforderung sind andere Ausrichtungen denkbar, wobei die Hebel 40 der Sperreinrichtung 4 parallel zu dem Schaft der Verbindungselemente 2 angeordnet sind und das Verbindungselement 2 entlang einer senkrecht zu dem Schaft stehenden Ebene verschoben wird.

Fig. 8 zeigt eine Vorrichtung 1 ähnlich den Figuren 1 bis 6 in einer geschnittenen Draufsicht bei der Übernahme eines Verbindungselements 2 in einen Übernahmebereich I. Die Vorrichtung 1 gemäß Fig. 8 entspricht im Wesentlichen der Vorrichtung 1 gemäß den Figuren 1 bis 6 und für gleiche Bauteile werden einheitliche Bezugszeichen verwendet. Auf eine erneute detaillierte Beschreibung bereits beschriebener Bauteile wird verzichtet. Im Unterschied zu den Figuren 1 bis 6 weisen die Nuten 32 Einlaufschrägen 36 auf, welche eine Führung der Vorsprünge 44 aus den Führungsnuten 32 bei einem Zurückziehen des Schiebers 30 aus einer in Fig. 6 dargestellten Position in die in Fig. 8 dargestellte Position erlauben. Dadurch kann auch auf Federelemente 45 verzichtet werden. In einer Abwandlung sind gleichwohl Federelemente oder andere Kraftelemente vorgesehen, welche die Hebel 40 in die Sperrposition zwingen.

## Patentansprüche

1. Vorrichtung zum Positionieren von Verbindungselementen (2) mit
- einer Vorschubeinrichtung (3) und
- einer Sperreinrichtung (4), die mindestens einen zwischen einer Sperrposition und einer Freigabeposition verschwenkbaren Hebel (40) aufweist,
wobei ein Verbindungselement (2) mittels der Vorschubeinrichtung (3) aus einem Übernahmebereich (I) in einen Übergabebereich (II) für eine Fügeeinrichtung überführbar ist, wobei der mindestens eine Hebel (40) zwischen einer Sperrposition und einer Freigabeposition verschwenkbar ist, und wobei der mindestens eine Hebel (40) in der Sperrposition eine Bewegung des Verbindungselements (2) aus dem Übernahmebereich (I) in den Übergabebereich (II) sperrt, **dadurch gekennzeichnet, dass**
mindestens ein relativ zu dem mindestens einen Hebel (40) verstellbarer Endanschlag vorgesehen ist, wobei mittels des mindestens einen Endanschlags eine Bewegung des mindestens einen Hebels (40) aus der Sperrposition in die Freigabeposition sperrbar ist, wobei der mindestens eine Hebel (40) als zweiseitiger Hebel (40) mit einem ersten Arm (41) und einem zweiten Arm (42) gestaltet ist, und wobei ein erster Arm (41) des mindestens einen Hebels (40) mit dem mindestens einen Endanschlag zur Sperrung einer Bewegung des mindestens einen Hebels (40) aus der Sperrposition in die Freigabeposition zusammenwirkt und ein zweiter Arm (42) des mindestens einen Hebels (40) in der Sperrposition als Haltebacken für das Verbindungselement (2) fungiert.

2. Vorrichtung nach Anspruch 1, **dadurch gekennzeichnet, dass** die Sperreinrichtung zwei gegenläufig verschwenkbare zweiseitige Hebel (40) aufweist, wobei die ersten Arme (41) der Hebel (40) mit dem Endanschlag zur Sperrung einer Bewegung der Hebel (40) aus der Sperrposition in die Freigabeposition zusammenwirken und die zweiten Arme (42) der Hebel (40) als Haltebacken für das Verbindungselement (2) fungieren.

3. Vorrichtung nach Anspruch 1 oder 2, **dadurch gekennzeichnet, dass** dem mindestens einen Hebel (40) ein Kraftelement, insbesondere ein Federelement (45) zugeordnet ist, welches den Hebel (40) in die Sperrposition zwingt.

4. Vorrichtung nach Anspruch 1, 2 oder 3, **dadurch gekennzeichnet, dass** das Verbindungselement (2) mittels der Vorschubeinrichtung entlang des zweiten Arms (42) des mindestens einen Hebels (40) in den Übergabebereich (II) verschieblich ist.

5. Vorrichtung nach eine, der Ansprüche 1 bis 4, **dadurch gekennzeichnet, dass** die Vorschubeinrichtung (3) einen relativ zu dem mindestens einen Hebel (40) linear verschiebbaren Schieber (30) umfasst, wobei ein erster Abschnitt des Schiebers (30) als Endanschlag fungiert.

6. Vorrichtung nach Anspruch 5, **dadurch gekennzeichnet, dass** der Schieber (30) einen in Längsrichtung zu dem ersten Abschnitt beabstandeten, zweiten Abschnitt aufweist, wobei der zweite Abschnitt eine Gestalt aufweist, um nach Überfahren einer Entriegelposition ein Verschwenken des mindestens einen Hebels (40) in die Freigabeposition freizugeben.

7. Vorrichtung nach Anspruch 6, **dadurch gekennzeichnet, dass** der erste Arm (41) des Hebels (40) oder der Hebel (40) einen in den Stellweg des Schiebers (30) ragenden, mit dem Endanschlag zusammenwirkenden Vorsprung (44) aufweist, wobei vorzugsweise eine dem Vorsprung (44) zugewandte Wand des Schiebers (30) in dem zweiten Abschnitt eine Nut (32) aufweist.

8. Vorrichtung nach einem der Ansprüche 1 bis 7, **dadurch gekennzeichnet, dass** eine maximale Stellbewegung der Vorschubeinrichtung (3) in Richtung des Übergabebereichs (II) bei einem Leerhub größer ist als bei einem Positionierhub eines Verbindungselements (2).

9. Vorrichtung zum Setzen von Verbindungselementen mit einer Zuführeinrichtung (6) zum vereinzelten Zuführen von Verbindungselementen zu einem Übernahmebereich (I), mit einem Setzstempel (7) zum Setzen eines in einem Übergabebereich (II) positionierten Verbindungselements (2) und mit einer Vorrichtung nach einem der Ansprüche 1 bis 8 umfassend eine Vorschubeinrichtung (3) und eine Sperreinrichtung (4), mittels der ein Verbindungselement (2) aus dem Übernahmebereich (I) in den Übergabebereich (II) überführbar ist.

10. Verfahren zum Positionieren von Verbindungselementen (2), wobei ein Verbindungselement (2) mittels einer Vorschubeinrichtung aus einem Übernahmebereich (I) in einen Übergabebereich (II) für eine Fügeeinrichtung überführt wird, wobei eine Bewegung des Verbindungselement (2) aus dem Übernahmebereich (I) in den Übergabebereich (II) mittels mindestens eines in einer Sperrposition angeordneten Hebels (40) einer Sperreinrichtung (4) gesperrt wird, und wobei der mindestens eine Hebel (40) der Sperreinrichtung (4) zur Bewegung des Verbindungselements (2) in den Übergabebereich (II) in eine Freigabeposition überführt wird, **dadurch gekennzeichnet, dass** bei einer Übernahme des Verbindungselements (2) in den Übernahmebereich (I) eine Bewegung des mindestens einen Hebels (40) aus der Sperrposition in die Freigabeposition mittels eines Endanschlags gesperrt wird, wobei der mindestens eine Hebel (40) als zweiseitiger Hebel (40) mit einem ersten Arm (41) und einem zweiten Arm (42) gestaltet ist, wobei ein erster Arm (41) des mindestens einen Hebels (40) mit dem Endanschlag bei einer Übernahme des Verbindungselements (2) in den Übernahmebereich (I) zusammenwirkt, sodass eine Bewegung des Hebels (40) aus der Sperrposition in die Freigabeposition gesperrt wird, und wobei die Bewegung des Verbindungselement (2) aus dem Übernahmebereich (I) in den Übergabebereich (II) mittels eines zweiten Arms (42) des mindestens einen in der Sperrposition angeordneten zweitseitigen Hebels (40) der Sperreinrichtung (4) gesperrt wird.

## Claims

1. Apparatus for positioning connecting elements (2), having
- an advancing device (3) and
- a blocking device (4), which has at least one lever (40) that is pivotable between a blocking position and a releasing position,
wherein a connecting element (2) is transferable by means of the advancing device (3) from a receiving region (I) into a delivery region (II) for a joining device, wherein the at least one lever (40) is pivotable between a blocking position and a releasing position, and wherein the at least one lever (40), in the blocking position, prevents any movement of the connecting element (2) from the receiving region (I) into the delivery region (II),
**characterized in that**
at least one end stop that is adjustable relative to the at least one lever (40) is provided, wherein, by means of the at least one end stop, any movement of the at least one lever (40) from the blocking position into the releasing position is preventable, wherein the at least one lever (40) is designed as a two-sided lever (40) having a first arm (41) and a second arm (42), and wherein a first arm (41) of the at least one lever (40) interacts with the at least one end stop to prevent any movement of the at least one lever (40) from the blocking position into the releasing position, and a second arm (42) of the at least one lever (40) acts, in the blocking position, as a retaining jaw for the connecting element (2).

2. Apparatus according to claim 1, **characterized in that** the blocking device has two two-sided levers (40) that are pivotable in opposite directions, wherein the first arms (41) of the levers (40) interact with the end stop to prevent any movement of the levers (40) from the blocking position into the releasing position, and the second arms (42) of the levers (40) act as retaining jaws for the connecting element (2).

3. Apparatus according to claim 1 or 2, **characterized in that** the at least one lever (40) is assigned a force element, in particular a spring element (45), which forces the lever (40) into the blocking position.

4. Apparatus according to claim 1, 2 or 3, **characterized in that** the connecting element (2) is displaceable into the delivery region (II) along the second arm (42) of the at least one lever (40) by means of the advancing device.

5. Apparatus according to any of claims 1 to 4, **characterized in that** the advancing device (3) comprises a slider (30) that is displaceable linearly relative to the at least one lever (40), wherein a first portion of the slider (30) acts as an end stop.

6. Apparatus according to claim 5, **characterized in that** the slider (30) has a second portion that is spaced apart from the first portion in a longitudinal direction, wherein the second portion has a design such as to enable the at least one lever (40) to pivot into the releasing position after an unlocking position has been crossed.

7. Apparatus according to claim 6, **characterized in that** the first arm (41) of the lever (40) or levers (40) has a protrusion (44) that projects into the adjustment travel of the slider (30) and interacts with the end stop, wherein, preferably, a wall of the slider (30), facing the protrusion (44), has a groove (32) in the second portion.

8. Apparatus according to any of claims 1 to 7, **characterized in that** a maximum adjusting movement of the advancing device (3) in the direction of the delivery region (II) is greater during an idle stroke than during a positioning stroke of a connecting element (2).

9. Apparatus for setting connecting elements, having a feed device (6) for feeding connecting elements individually to a receiving region (I), having a setting die (7) for setting a connecting element (2) positioned in a delivery region (II), and having an apparatus according to any of claims 1 to 8, comprising an advancing device (3) and a blocking device (4), by means of which a connecting element (2) is transferable from the receiving region (I) into the delivery region (II).

10. Method for positioning connecting elements (2), wherein a connecting element (2) is transferred by means of an advancing device from a receiving region (I) into a delivery region (II) for a joining device, wherein a movement of the connecting element (2) from the receiving region (I) into the delivery region (II) is prevented by means of at least one lever (40), arranged in a blocking position, of a blocking device (4), and wherein the at least one lever (40) of the blocking device (4) is transferred into a releasing position in order for the connecting element (2) to move into the delivery region (II),
**characterized in that**,
when the connecting element (2) is received in the receiving region (I), any movement of the at least one lever (40) from the blocking position into the releasing position is prevented by means of an end stop, wherein the at least one lever (40) is designed as a two-sided lever (40) having a first arm (41) and a second arm (42), wherein a first arm (41) of the at least one lever (40) interacts with the end stop, when the connecting element (2) is received in the receiving region (I), such that any movement of the lever (40) from the blocking position into the releasing position is prevented, and wherein the movement of the connecting element (2) from the receiving region (I) into the delivery region (II) is prevented by means of a second arm (42) of the at least one two-sided lever (40), arranged in the blocking position, of the blocking device (4).

## Revendications

1. Dispositif de positionnement d'éléments de fixation (2), avec
- un dispositif d'avance (3) et
- un dispositif de blocage (4), qui présente au moins un levier (40) pouvant pivoter entre une position de blocage et une position de libération,
dans lequel un élément de fixation (2) peut être transféré au moyen du dispositif d'avance (3) d'une région de réception (I) à une région de cession (II) pour un dispositif de jonction, dans lequel ledit au moins un levier (40) peut pivoter entre une position de blocage et une position de libération, et dans lequel ledit au moins un levier (40) dans la position de blocage bloque un mouvement de l'élément de fixation (2) de la région de réception (I) à la région de cession (II), **caractérisé en ce qu'**il est prévu au moins une butée d'extrémité réglable par rapport audit au moins un levier (40), dans lequel un mouvement dudit au moins un levier (40) de la position de blocage à la position de libération peut être bloqué au moyen de ladite au moins une butée d'extrémité, dans lequel ledit au moins un levier (40) est formé par un levier bilatéral (40) avec un premier bras (41) et un second bras (42), et dans lequel un premier bras (41) dudit au moins un levier (40) coopère avec ladite au moins une butée d'extrémité pour le blocage d'un mouvement dudit au moins un levier (40) de la position de blocage à la position de libération et un second bras (42) dudit au moins un levier (40) fait office, dans la position de blocage, de mâchoire de retenue pour l'élément de fixation (2).

2. Dispositif selon la revendication 1, **caractérisé en ce que** le dispositif de blocage présente deux leviers bilatéraux (40) pouvant pivoter en sens contraire, dans lequel les premiers bras (41) des leviers (40) coopèrent avec la butée d'extrémité pour le blocage d'un mouvement des leviers (40) de la position de blocage à la position de libération et les seconds bras (42) des leviers (40) font office de mâchoires de retenue pour l'élément de fixation (2).

3. Dispositif selon une revendication 1 ou 2, **caractérisé en ce qu'**un élément de force, en particulier un élément de ressort (45), qui pousse le levier (40) dans la position de blocage, est associé audit au moins un levier (40).

4. Dispositif selon une revendication 1, 2 ou 3, **caractérisé en ce que** l'élément de fixation (2) peut être déplacé dans la région de cession (II) le long du second bras (42) dudit au moins un levier (40) au moyen du dispositif d'avance.

5. Dispositif selon l'une quelconque des revendications 1 à 4, **caractérisé en ce que** le dispositif d'avance (3) comprend un coulisseau (30) déplaçable linéairement par rapport audit au moins un levier (40), dans lequel une première partie du coulisseau (30) fait office de butée d'extrémité.

6. Dispositif selon la revendication 5, **caractérisé en ce que** le coulisseau (30) présente une seconde partie, espacée de la première partie en direction longitudinale, dans lequel la seconde partie présente une forme, destinée à libérer un pivotement dudit au moins un levier (40) dans la position de libération après le franchissement d'une position de déverrouillage.

7. Dispositif selon la revendication 6, **caractérisé en ce que** le premier bras (41) du levier (40) ou des leviers (40) présente une protubérance (44) pénétrant dans le chemin de réglage du coulisseau (30) et coopérant avec la butée d'extrémité, dans lequel de préférence une paroi du coulisseau (30) tournée vers la protubérance (44) présente une rainure (32) dans la seconde partie.

8. Dispositif selon l'une quelconque des revendications 1 à 7, **caractérisé en ce qu'**un déplacement de réglage maximal du dispositif d'avance (3) en direction de la région de cession (II) lors d'une course à vide est plus grand que lors d'une course de positionnement d'un élément de fixation (2).

9. Dispositif de pose d'éléments de fixation avec un dispositif d'alimentation (6) pour l'alimentation individualisée d'éléments de fixation à une région de réception (I), avec un poinçon de placement (7) pour placer un élément de fixation (2) positionné dans une région de cession (II) et avec un dispositif selon l'une quelconque des revendications 1 à 8, comprenant un dispositif d'avance (3) et un dispositif de blocage (4), au moyen duquel un élément de fixation (2) peut être transféré d'une région de réception (I) à une région de cession (II).

10. Procédé de positionnement d'éléments de fixation (2), dans lequel on transfère un élément de fixation (2) au moyen d'un dispositif d'avance d'une région de réception (I) à une région de cession (II) pour un dispositif de jonction, dans lequel on bloque un mouvement de l'élément de fixation (2) de la région de réception (I) à la région de cession (II) au moyen d'au moins un levier (40) d'un dispositif de blocage (4) disposé dans une position de blocage, et dans lequel on transfère ledit au moins un levier (40) du dispositif de blocage (4) dans une position de libération pour le mouvement de l'élément de fixation (2) dans la région de cession (II), **caractérisé en ce que** lors d'une réception de l'élément de fixation (2) dans la région de réception (I), on bloque un mouvement dudit au moins un levier (40) de la position de blocage à la position de libération au moyen d'une butée d'extrémité, dans lequel ledit au moins un levier (40) est formé par un levier bilatéral (40) avec un premier bras (41) et un second bras (42), dans lequel un premier bras (41) dudit au moins un levier (40) coopère avec la butée d'extrémité lors d'une réception de l'élément de fixation (2) dans la région de réception (I), de telle manière qu'un mouvement du levier (40) de la position de blocage à la position de libération soit bloqué, et dans lequel on bloque le mouvement de l'élément de fixation (2) de la région de réception (I) à la région de cession (II) au moyen d'un second bras (42) dudit au moins un levier bilatéral (40) du dispositif de blocage (4) disposé dans la position de blocage.
